Europäisches Patentamt

European Patent Office

Office européen des brevets

(11) Publication number: **0 408 142 A1**

## EUROPEAN PATENT APPLICATION

(21) Application number: **90201848.0**

(22) Date of filing: **10.07.90**

(30) Priority: **11.07.89 NL 8901779**

(43) Date of publication of application:
**16.01.91 Bulletin 91/03**

(84) Designated Contracting States:
**AT BE CH DE DK ES FR GB IT LI LU NL SE**

(71) Applicant: **NEDERLANDS CENTRUM VOOR
LASER RESEARCH B.V.**
**Postbus 2662**
**NL-7500 CR Enschede(NL)**

(51) Int. Cl.⁵: **H01S 3/097**

(72) Inventor: **Keet, Aart Louis**
**Else Mauhsstraat 110**
**NL-7558 RC Hengelo(NL)**
Inventor: **Gerritsen, Jan Willem**
**Leerdamhof 342**
**NL-1108 CD Amsterdam Z.O.(NL)**

(74) Representative: **Smulders, Theodorus A.H.J.,
Ir. et al**
**Vereenigde Octrooibureaux Nieuwe Parklaan
107**
**NL-2587 BP 's-Gravenhage(NL)**

(54) **Method and electric circuit for exciting a gas discharge laser.**

(57) A method and a device are disclosed for exciting a gas discharge laser, wherein two capacitive energy storage circuits are coupled in parallel to the electrodes of a laser, wherein a first of said energy storage circuits serves to provide energy to the laser to sustain a discharge therein, and wherein a second of said energy storage circuits serves to provide energy to the laser to effect ignition of the discharge. Immediately prior to ignition, the polarity of the second energy storage circuit is opposite to the polarity of the first energy storage circuit. By resonantly transferring charge from the first energy storage circuit to the second energy storage circuit, the polarity of the second energy storage circuit is reversed and the voltage level of the second energy storage circuit is brought to a value suitable for igniting the laser by virtue of the overshoot effect.

fig-1

## METHOD AND ELECTRIC CIRCUIT FOR EXCITING A GAS DISCHARGE LASER.

The invention relates to a method of exciting a gas discharge laser comprising first and second electrodes having connected to them capacitive first and second electric energy storage circuits between which resonant charge transfer is possible; wherein an electric charge is provided to the first energy storage circuit resulting in a voltage with a first polarity relative to the electrodes of the laser; wherein electric charge is resonantly transferred from the first energy storage circuit to the second energy storage circuit for igniting the laser; and wherein sufficient electric energy is supplied from the first energy storage circuit for sustaining the laser in an ignited state for a certain period of time

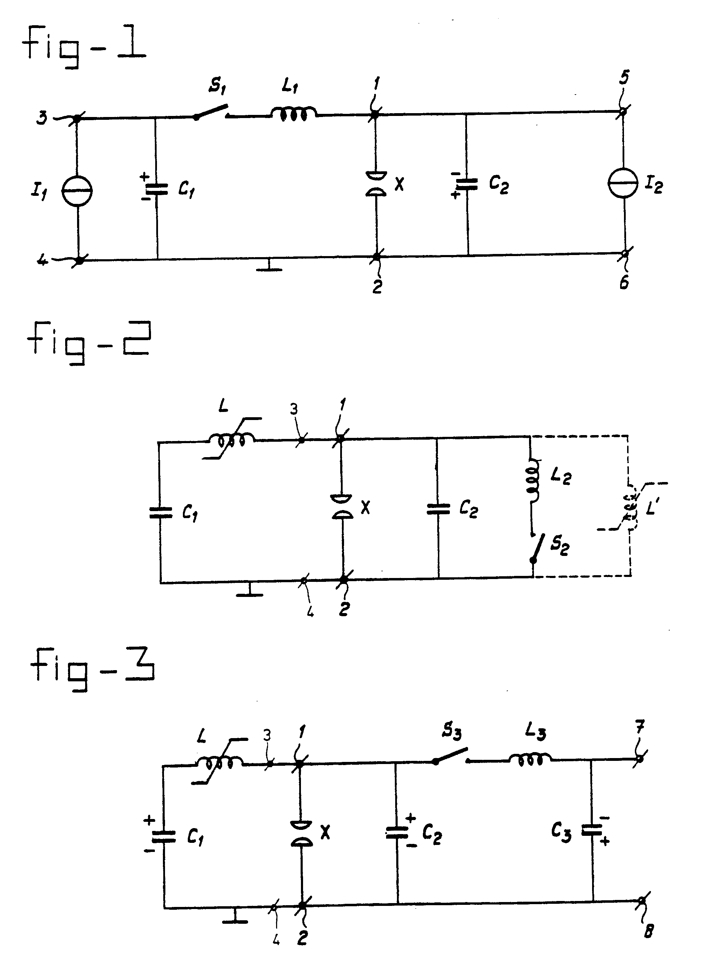

A method of this type is described in an article entitled "Pulsed $CO_2$ Laser Pumped by an All Solid-State Magnetic Exciter", by T. Shimada et al., Japanese Journal of Applied Physics, Vol. 24, No. 11, November 1985, pp. L855-L857. As shown in Fig.1 of this article the first energy storage circuit comprises a series pulse compression circuit including a transformer stage, and the second energy storage circuit is a so-called peak capacitor (Cp) with a leakage coil connected in parallel.

For initiating a gas discharge laser in a defined manner an ignition voltage in the kV range is required which, depending on the type and the construction of the laser, may be 2-4 to 6 times the value of the discharge voltage, i.e. the voltage for sustaining the gas discharge of the laser in question. Carbon dioxide lasers ($CO_2$ lasers) require an ignition voltage which is approximately twice the discharge voltage, while for the uniform ignition of so-called excimer lasers (for example XeCl lasers) typically an ignition voltage of at least about four times the discharge voltage is required.

The method recited in the preamble is particularly suitable for exciting $CO_2$ lasers. By resonantly transferring electric charge from the first energy storage circuit, for instance one or more parallel connected capacitors charged to the discharge voltage of the laser, to the still uncharged second energy storage circuit, for instance one or more parallel connected capacitors with a total capacitance value which is smaller than that of the first energy storage circuit by one order of magnitude or more, it is possible to obtain in this second energy storage circuit a voltage which is doubled relative to the voltage of the first energy storage circuit, as is required for igniting the laser.

"Resonant transfer of electric charge" refers to the stepwise inductive coupling of the first energy storage circuit to the second energy storage circuit. Basically, use is made of a known overshoot phenomenon, i.e. the step response in second order systems, for instance an LC series connection, which,when said second order system is suitably dimensioned, leads to an overshoot of virtually 100% of the actual step magnitude. See for instance the manual "Electric Circuits", Schaum Outline Series, published by McGraw Hill 1972.

As observed hereinabove, exciting for instance an excimer gas discharge laser in a defined manner requires an ignition voltage of at least approximately four times the discharge voltage. Gas discharge lasers of this type can generally be subjected to a voltage of twice the discharge voltage for a short time (about <10 $\mu$s) without risk of undefined discharge of the gas mixture. This property can be used to realize the required high ignition voltage by means of resonant charge transfer, for instance by constructing the first energy storage circuit as an excitation network built as a transmission line with input ends for connecting a power supply and output ends for connecting the laser.

The transmission line network is then controlled in such a way that a voltage of twice the discharge voltage appears at its output ends. By effecting from that moment a resonant charge transfer from the first to the second energy storage circuit, a voltage of the order of four times the discharge voltage results across the laser. The laser ignites, whereafter,when the impedancies of the laser and the transmission line network are adjusted, the result is a voltage across the laser of the magnitude of the discharge voltage.

In practice sometimes two separate non-resonantly cooperating capacitive excitation circuits are utilized, in particular for exciting gas discharge lasers having an ignition voltage of more than twice the discharge voltage and generally not being allowed to be subjected to a voltage larger than the discharge voltage without risk of undefined discharge, viz. a first excitation circuit providing a voltage equal to the discharge voltage for sustaining the gas discharge for some time, and a second excitation circuit for providing the required high ignition voltage for the laser in question.

The use of two separate capacitive excitation circuits has an energy-technical background. The point is that in principle a single excitation circuit, for instance a capacitor, would suffice. Suppose that for sustaining the gas discharge for a certain period of time an amount of energy of $\frac{1}{2} CU_b^2$ is required, where $U_b$ = the discharge voltage of the laser and C represents the capacitance value necessary for storing the required amount of discharge energy. To ignite the laser, however, the circuit must be charged to the ignition voltage. At an ignition voltage of four times the discharge voltage, this requires an amount of energy of 8 $CU_b^2$. Only a fraction of this is needed for igniting of the laser. After the laser is ignited, the voltage across the laser rapidly diminishes to the value of the discharge voltage, which means that a relatively large amount of energy must be dissipated in a relatively short time. That this is undesirable requires no further explanation.

The use of two separate excitation circuits offers the possibility of charging one circuit to the high ignition voltage with the relatively small amount of energy necessary for igniting the laser as compared with the amount of energy in the other circuit required for sustaining the gas discharge, though at the lower discharge voltage. In this way only the total amount of energy required for the operation of the laser needs to be stored in the two excitation circuits, not mentioning the inevitable losses.

In the article "Efficient discharge pumping of an XeCl laser using a high-voltage prepulse", by W.H. Long, Jr. et al., Appl. Phys. Lett. 43 (8), 15 October 1983, pp. 735-737 and in the article "High efficiency XeCl laser with spiker and magnetic isolation" by C.H. Fisher, et al., Appl. Phys. Lett 48 (23), 9 June 1986, pp. 1574-1576, electric circuits are discussed in which the two excitation circuits can be connected in parallel to the laser. For their mutual electric separation at least the second excitation circuit comprises a spark gap switch or an inductive element for igniting the laser. U.S. patent specification 4,679,203 discloses a system and method for magnetically inducing the ignition voltage for a gas discharge laser. To that end the two excitation circuits are mutually coupled through a saturable transformer, the required high ignition voltage being obtained by superposition.

In comparison with the principle set forth in the preamble, according to which at least the second energy storage circuit can be directly connected to the electrodes of the laser, the use of the principle of two separate excitation circuits to be coupled to the laser generally has the disadvantage that for the electric separation of the two circuits switching means, such as a spark gap or a magnetic coupling, are required which must be able to switch the amount of energy necessary for igniting the laser in a sufficiently short time. In order to achieve the pulse rise time necessary for igniting a laser in a defined manner, it is necessary that the second excitation circuit for igniting the laser can be coupled to the laser in a low-inductance manner. With spark gap switches or magnetic switches, for instance, this is not an easy problem to solve. Further, spark gap switches are less suitable according as the repetition frequency at which the laser is operated is higher.

The excitation method or circuit disclosed in the Fisher et al. article has the further drawback of an undesirable time delay between the ignition of the laser and the effective onset of the energy current from the first excitation circuit to the ignited laser. The cause of this is the coil arranged in the first excitation circuit for separating the first excitation circuit from the second excitation circuit.

When the two excitation circuits have the same polarity relative to the electrodes of the laser, said coil operates as a magnetic diode and is in a non-saturated "blocking" condition when the laser is not ignited. Only after the ignition does the voltage across the laser become sufficiently low so that the magnetic diode becomes "conductive", i.e. the coil becomes saturated. It takes some time before the coil reaches a state of saturation and the energy current from the first excitation circuit effectively feeds the laser.

Reversal of the voltage across the second excitation circuit, for instance, leads to the coil operating as a magnetic switch, so without time delay. It is a drawback, however, that the moment of saturation of the coil must coincide with the ignition of the laser, which is hard to realize in practice. A further disadvantage is the voltage reversal across the electrodes of the laser (negative at ignition, positive at discharge). This may have an adverse influence on the stability of the gas discharge.

The excitation principle disclosed in the aforementioned U.S. patent specification also suffers from the drawback of an undesirable time delay between the ignition of the laser and the effective onset of the energy current from the first excitation circuit. When the excitation circuits are of equal polarity relative to the electrodes of the laser, a magnetization current flows through the transformer, for obtaining the required high ignition voltage by superposition, said magnetization current having a direction opposite to the direction of the final discharge current to the laser. Time is needed for reversing the magnetization of the transformer.

When excitation circuits are oppositely charged, such a delay can be avoided if the moment of saturation of the transformer coincides with the ignition of the laser, which is hard to realize in practice. Here, too, voltage reversal across the electrodes of the laser occurs with all its possible drawbacks.

The invention, then, aims to render the method set forth in the preamble for exciting a gas discharge laser through resonant charge exchange particularly suitable for lasers with an ignition voltage higher than twice the discharge voltage. In accordance with the invention this is achieved by the following steps:
- supplying the second energy storage circuit with an electric charge, such that a voltage results with a second polarity relative to the electrodes of the laser, said second polarity being opposite to the first polarity; followed by

- effecting a resonant charge exchange between the first and the second energy storage circuits, in such a way that the second energy storage circuit attains a voltage of the first polarity, sufficiently high for igniting the laser.

By supplying the second energy storage circuit with an electric charge in accordance with the invention, it is achieved that the effective amplitude of the voltage step in the resonant exchange of charge between the two energy storage circuits is equal to the sum of the absolute value of the voltage of the first and the second energy storage circuits. At an overshoot of 100%, across the second energy storage circuit, for the ignition of the laser, in theory a voltage is realized of twice the value of the sum voltage minus the value of the voltage of the second energy storage circuit prior to the charge exchange.

When for instance the two energy storage circuits carry voltages of a magnitude of the discharge voltage $U_b$, by resonant charge exchange a voltage of a magnitude of 3 $U_b$ results across the second energy storage circuit. When the first energy storage circuit is charged to a voltage of $U_b$ and the second energy storage circuit to 2 $U_b$, an ignition voltage results of a value 4 $U_b$, etc.

By the method according to the invention it is now relatively easy to obtain through resonant charge exchange the voltage amplitude required for igniting virtually all types of gas discharge lasers in a defined manner, namely by supplying the second energy storage circuit with a suitable "pre-voltage".

In the method according to the invention the ignition voltage across the laser always has the same polarity as the voltage of the first energy storage circuit for sustaining the gas discharge for some time. After the ignition of the laser no voltage reversal across its electrodes occurs, which improves the stability of the gas discharge.

In comparison with for instance the known method of exciting gas discharge lasers using two electrically separated excitation circuits, the method according to the invention has energetically more favourable properties. Although the circuit for the ignition of the laser in the known method and the second energy storage circuit according to the invention have the same capacitance values since, in the end, both have to supply the amount of energy required for igniting the laser, they are not in the same state of charge before the ignition of the laser because in the known method the circuit in question has to be charged to the ignition voltage whereas in the invention only charging to a lower pre-voltage is needed.

In accordance with the invention the first and second energy storage circuits may each be separately supplied with an electric charge of the desired polarity. However, this requires two separate connections to a high voltage supply or two separate high voltage supplies.

A further embodiment of the method according to the invention is characterized in that the step of supplying the second energy storage circuit with an electric charge comprises:

- supplying the second energy storage circuit with an electric charge, resulting in a voltage with the first polarity, and
- charge reversing the second energy storage circuit for effecting a state of charge resulting in a voltage with the second polarity.

This embodiment makes it possible, for instance, to supply the second energy storage circuit with electric charge from the high voltage supply terminal of the first energy storage circuit, after which this second energy storage circuit, by charge reversing it, can be brought to the polarity desired for the resonant charge exchange with the first energy storage circuit. Accordingly, a single connection to a high voltage supply is sufficient.

In accordance with yet another embodiment of the invention this can be achieved by resonantly charge reversing the second energy storage circuit in itself. Yet another embodiment is characterized in that the second energy storage circuit is charge reversed using a capacitive third energy storage circuit supplied with an electric charge.

Using a third energy storage circuit has the advantage that the final state of charge of the second energy storage circuit can accurately be defined. By resonantly charge reversing the second energy storage circuit it can be brought to a desired voltage prior to the charge exchange with the first energy storage circuit, which desired voltage may be higher than the voltage of the first energy storage circuit. The use of a third energy storage circuit also has the advantage that no further means for charge reversing it need to be connected to the second energy storage circuit, which further means generally cause an undesirable stray inductance. The fact is that this third energy storage circuit can be included in the current path of the first energy storage circuit for the charge reversal of the second energy storage circuit.

Another interesting application of the third energy storage circuit is particularly important for the excitation of $CO_2$ lasers. By initially charging just the third energy storage circuit and subsequently suitably discharging it completely or partly, simultaneously with the charging of the first energy storage circuit, it can be realized that during the charging of the first energy storage circuit the voltage across the second energy storage circuit, and hence across the electrodes of the laser, remains substantially equal to zero volts. This is important for the prevention of undefined discharge of this type of laser.

The invention further relates to an electric excitation circuit, suitable for carrying out the method according to the invention as described hereinabove, comprising: first and second load terminals for connecting an electric load; at least one capacitive first energy storage circuit with means for supplying electric charge to said at least one first energy storage circuit, resulting in a voltage with a first polarity relative to the load terminals, said first energy storage circuit being connected with the load terminals via a first inductive switching circuit; and at least one capacitive second energy storage circuit connected with the load terminals; characterized by further means for supplying electric charge to said at least one second energy storage circuit, resulting in a voltage with a second polarity relative to the load terminals, said second polarity being opposite to the first polarity.

A further embodiment of this electric excitation circuit is characterized in that the further means comprise an inductive further switching circuit coupled to said at least one second energy storage circuit, for the resonant supply of electric charge to said at least one second energy storage circuit. Using an excitation circuit designed in this manner and with the aid of a supply with a supply voltage equal to the discharge voltage of the laser, said at least one second energy storage circuit can be charged to twice the value of the discharge voltage. Accordingly, it is not necessary to utilize one supply or more supplies with different voltages to charge said at least one first and second energy storage circuits to the discharge voltage and twice the value of the discharge voltage, respectively.

Yet another embodiment of the excitation circuit according to the invention for supplying said at least one first and second energy storage circuits with the desired electric charge using one supply connection, is characterized in that one switching circuit is equipped for supplying electric charge from said at least one first energy storage circuit to said at least one second energy storage circuit, resulting in a voltage with the first polarity, the further means being equipped for charge reversing said at least one second energy storage circuit. Said one switching circuit may for instance be constructed as a magnetically saturable coil.

An embodiment of the excitation circuit for charge reversing said at least one second energy storage circuit in itself is characterized in that the further means comprise an inductive further switching circuit coupled to said at least one second energy storage circuit, the switching of said further switching circuit permitting the resonant charge reversal of said at least one second energy storage circuit.

Yet another embodiment of the excitation circuit according to the invention for charge reversing said at least one second energy storage circuit is characterized in that the further means comprise at least one capacitive third energy storage circuit, with yet further means for supplying electric charge to this at least one third energy storage circuit, and a yet further switching circuit coupled thereto, the switching of said switching circuit permitting the exchange of charge with said at least one second energy storage circuit for the charge reversal thereof. One of the advantages of using such an at least one third energy storage circuit is that with it said at least one second energy storage circuit can be brought into a desired state of charge prior to the charge exchange with the first energy storage circuit.

In accordance with further embodiments of the excitation circuit said at least one third energy storage circuit can be coupled in series as well as in parallel with said at least one second energy storage circuit to realize the desired charge reversal.

A preferred embodiment of the excitation circuit according to the invention in which said at least one second energy storage circuit can be coupled with the load terminals of the circuit without further switching means and the like in a low-inductance manner, is characterized in that said at least one third energy storage circuit connected in series with its yet further switching circuit is coupled in parallel with said one inductive switching circuit. Partly as a result of this low-inductance coupling of said at least one second energy storage circuit to the load terminals of the excitation circuit, virtually the maximum attainable ignition voltage for given charges of the energy storage circuits in question can be achieved.

In a further embodiment of the excitation circuit a galvanic isolation between said at least one first and second energy storage circuits and said third energy storage circuit is achieved in accordance with the invention in virtue of the fact that said one inductive switching circuit comprises at least one magnetically saturable transformer, to the primary winding of which said at least one third energy storage circuit in series with its yet further switching circuit is connected, and the secondary winding of which is connected in series with said at least one first energy storage circuit.

The yet further switching circuit can be designed as an inductive switching circuit, for instance by including a coil in series with the switching means, for the resonant exchange of charge between said at least one third and at least one second energy storage circuit.

Because the further and yet further inductive switching circuits at most have to switch voltages of twice the value of the discharge voltage of the laser, these inductive switching circuits, depending on the value of the discharge voltage, can advantageously comprise a series circuit of a semiconductor switching element and an inductive element.

As discussed above, said at least one first, second and third energy storage circuits can be built from one or more elements with capacitive action, and inter alia said at least one first energy storage circuit may also be designed as a (part of a) pulse forming network, for instance a transmission line. For charging the energy storage circuits, advantageously a power supply circuit can be used.

The invention will now be further explained with reference to the basic circuit diagrams shown in the drawings, in which like or functionally similar elements are given like reference characters and in which:

Fig. 1 shows the basic diagram of the electric excitation circuit, suitable for carrying out the method according to the invention;

Figs. 2-5 show embodiments of the electric excitation circuit according to the invention, based on the basic diagram according to Fig. 1, and

Figs. 6a, b graphically represent the amplitude in time of the voltage and current, respectively, indicated in the circuit according to Fig. 5.

Figure 1 shows the basic diagram of the electric excitation circuit according to the invention. Connected to first and second load terminals 1, 2 is a gas discharge laser X, for instance a $CO_2$ laser or excimer laser, by means of its respective electrodes. Connected in parallel with the first and second load terminals 1, 2 is a series circuit, comprising switching means $S_1$ for high voltage, an inductance $L_1$ and a first energy storage circuit $C_1$. Although the switching means $S_1$ are shown as a mechanical switch, they may be designed in various ways, for instance as a spark gap, as semiconductor switching element(s), as a magnetic switch, etc. The inductance $L_1$ is built from the stray inductance of the series circuit, if desired supplemented with a magnetic element such as a coil. Although the first energy storage circuit $C_1$ is shown as a single capacitor, it may in practice consist of a plurality of parallel connected capacitors or be a part of a pulse forming network, for instance in the form of a transmission line. See for instance Figure 5 of the article "Stripline Magnetic Modulators for Lasers and Accelerators", by W.C. Nunnally, Proceedings of the Int. Pulse Power Conf., 1981, at Albuquerque, pp. 210-213.

Further, connected in parallel with the first and second load terminals 1, 2 of the circuit is a second energy storage circuit $C_2$, which is also represented as a single capacitor. This second energy storage circuit $C_2$, too, may in practice consist of a plurality of parallel connected capacitors. The first $C_1$ and second $C_2$ energy storage circuits comprise terminals 3, 4 and 5, 6, respectively, for electric charge to be supplied to them. To that end Figure 1 shows power supply circuits $l_1$ and $l_2$ connected with the respective terminals.

The first $C_1$ and second $C_2$ energy storage circuits and the inductance $L_1$ form a second-order system. When the system is suitably dimensioned - in general, when the capacitance value of the second energy storage circuit $C_2$ is smaller than the capacitance value of the first energy storage circuit $C_1$ by at least one order of magnitude - the step response of this second-order system will exhibit an overshoot of virtually 100%. The operation of the circuit can be described as follows.

Suppose that the first energy storage circuit $C_1$ is supplied with an electric charge resulting in a voltage of a magnitude $U_b$, which is the discharge voltage of the laser X, with a first polarity relative to the first and second load terminals 1, 2 as shown in the Figure by ±- signs. In accordance with the method according to the invention the second energy storage circuit $C_2$ is also supplied with an electric charge, resulting in a voltage with a value of for instance $2U_b$, with a second polarity relative to the first and second load terminals 1, 2 as shown in the Figure by ±-signs. As can be seen in the Figure, the second polarity is opposite to the first polarity. By switching the switching means $S_1$, i.e. bringing them into a conducting state, a stepwise exchange of electric charge between the two energy storage circuits is made possible. The effective amplitude of the switching step equals the sum of the voltages across the first $C_1$ and second $C_2$ energy storage circuits, i.e. $3U_b$ in the example given. An overshoot of 100% results in a voltage step of a magnitude of $6U_b$ across the second energy storage circuit $C_2$, with a polarity opposite to the polarity of its original electric charge. The voltage across the first and second load terminals 1, 2 now equals twice the value of the switching voltage step minus the original voltage of the second energy storage circuit $C_2$, i.e. $4U_b$ in the example given.

As a result of this increase in voltage a laser X connected to the first and second load terminals 1, 2 will ignite, which implies a decrease of its impedance, the second energy storage circuit $C_2$ discharging into the laser X. Using the first energy storage circuit $C_1$, which carries a voltage of a magnitude of the discharge voltage $U_b$ of the laser X, the gas discharge in the laser X can be sustained for some more time.

After the gas discharge in the laser X has extinguished, as a result of which it acquires an impedance with a high value again, the switching means $S_1$ can be brought into a non-conducting state, after which the respective energy storage circuits can be supplied with suitable electric charge again and the process of igniting the laser X can be repeated.

When the first energy storage circuit is a part of a pulse forming network, built for instance as a transmission line with input ends to which the power supply circuit $I_1$ is connected and with output ends connected to the load terminals 1, 2, a voltage of twice the value can be used, i.e. $2U_b$. The point is that by seeing to it that the characteristic impedance of the transmission line is equal as much as possible to the impedance of the laser in an ignited state, a voltage division is established, the result being a voltage across the ignited laser of the magnitude of the discharge voltage. However, this means that the amplitude of the switching voltage step may be $4U_b$ in this case, which at an overshoot of 100% results in an ignition voltage across the first and second load terminals 1, 2 of the circuit of a magnitude of $6U_b$.

Accordingly, this excitation circuit, operated in accordance with the method according to the invention, permits a sufficiently high ignition voltage for uniformly igniting a gas discharge laser to be generated without the necessity of providing further switching means for connecting a separate circuit for the supply of the ignition voltage with the laser X. Thus the circuit according to the invention creates the conditions for realizing the aim that exists in practice of a higher repetition frequency for the excitation of lasers.

A further important advantage resides in the fact that the second energy storage circuit needs not be charged to the ignition voltage of the laser, for instance $4U_b$, but only to a pre-voltage of only $2U_b$. This means an improvement in efficiency, and in addition as a result of this lower pre-voltage the switching means $S_1$ in the excitation circuit according to the invention are less heavily burdened than the switching means in the ignition circuit of two separate excitation circuits operating without resonant charge exchange. This means that in the circuit according to the invention relatively less expensive switching means which may have a longer lifetime can be used in comparison with excitation circuits operating with a separate ignition circuit.

For the first $C_1$ and second $C_2$ energy storage circuits to be charged with the desired opposite polarity, they must each comprise, in the circuit according to Figure 1, terminals 3, 4 and 5, 6, respectively. For the resonant charging of the first $C_1$ and second $C_2$ energy storage circuits, if so desired, inductive switching circuits may be connected to the respective terminals (not shown).

Figure 2 shows a further embodiment of the excitation circuit according to the invention, in which only terminals 3, 4 are present. The switching means $S_1$ with the inductance $L_1$ are replaced by a magnetically saturable inductive element L, for instance a coil wound round a core of saturable magnetic material. Connected in parallel with the second energy storage circuit $C_2$ is a further inductive switching circuit comprising switching means $S_2$ with inductance $L_2$. When the first energy storage circuit $C_1$ is charged from the terminals 3, 4, the second energy storage circuit $C_2$ will also be charged, in the same polarity relative to the first and second load terminals 1, 2 as the first energy storage circuit $C_1$. Using the further inductive switching circuit $S_2$, $L_2$, the second energy storage circuit $C_2$ can then be charge reversed to obtain in accordance with the method according to the invention the desired initial polarity for igniting the laser X. The circuit should be dimensioned in such a way that the charge reversal of the second energy storage circuit $C_2$ is completed before the inductive element L is saturated.

The point where a saturable inductive element, for instance a coil wound about a saturable magnetic core, is saturated can be derived from the following formula:

$$\int U.dt = N.A.\delta B$$

wherein:

$U$ = the voltage (V) across the coil,

$N$ = the number of windings of the coil,

$A$ = the area $(m^2)$ of the magnetic material, and

$\delta B$ = the total flux swing $(V\ sec/m^2)$.

By using means for pre-magnetizing the coil in a particular direction, the moment of saturation, for instance, can be varied and defined. For the sake of clarity these known per se means for pre-setting the coil are not shown in the figures in question.

When the element L is saturated, its impedance will be virtually equal to the ohmic resistance of the coil, with a sufficient residual inductance to effect charge exchange between the first $C_1$ and second $C_2$ energy storage circuits. During the resonant charge exchange the current through the inductive element L continues to flow in the same direction, so that it remains saturated. When the gas discharge in the laser is extinguished, the inductive element L will leave the state of saturation and the excitation cycle described hereinabove can be repeated.

It will be clear that the inductive switching circuit $S_2$, $L_2$ can also be replaced by a magnetically saturable inductive element $L'$ as is indicated in Fig. 2 by broken lines. When the voltage across the second energy storage circuit $C_2$, when loaded from the terminals 3, 4, has reached a sufficient value, equal to the discharge voltage $U_b$ of the laser, for instance, suitable dimensioning may provide that the magnetically saturable inductive element L' connected in parallel reaches saturation, the result being the charge reversal of the second energy storage circuit. Due to this charge reversing current the inductive element in question remains in a saturated state during the charge reversal. Such a circuit comprising magnetically saturable inductive elements L, L' has a longer lifetime in normal use, and, with relatively inexpensive simple means, makes a higher excitation repetition frequency of the laser possible than excitation circuits in which for instance spark gap switches are used.

Figure 3 shows an embodiment of the circuit according to Figure 2, in which for the charge reversal of the second energy storage circuit $C_2$ a series circuit comprising a third energy storage circuit $C_3$ with switching means $S_3$ and inductance $L_3$ is connected in parallel. The third energy storage circuit $C_3$ comprises terminals 7, 8 for electrically charging it. This third energy storage circuit $C_3$ may also consist of one or more parallel capacitors, or a pulse forming network, or a pulse compression circuit, or a network built as a transmission line. The switching circuit $S_3$, $L_3$, may in turn be replaced by a magnetically saturable inductive element.

In the circuit according to Figure 3, for the second energy storage circuit $C_2$ to be brought to a voltage equal to for instance twice the discharge voltage of the laser, a power supply of a voltage of $U_b$ connected to the respective terminals 3, 4 and 7, 8 of the circuit will be sufficient. From the terminals 3, 4 the second energy storage circuit $C_2$ can then be charged to a voltage $U_b$, with a polarity as shown in Figure 3 by ±- signs. By also charging the third enery storage circuit $C_3$ to the voltage $U_b$ with a polarity as shown, the voltage across the second energy storage circuit $C_2$ can be raised through resonant charge exchange to at least twice the value of the discharge voltage, with a polarity necessary for charge exchange with the first energy storage circuit $C_1$ in accordance with the method according to the invention. For such a resonant charge exchange it is accordingly prescribed that the capacitance value of the second energy storage circuit $C_2$ should be smaller than the capacitance value of the third energy storage circuit $C_3$ by at least one order of magnitude.

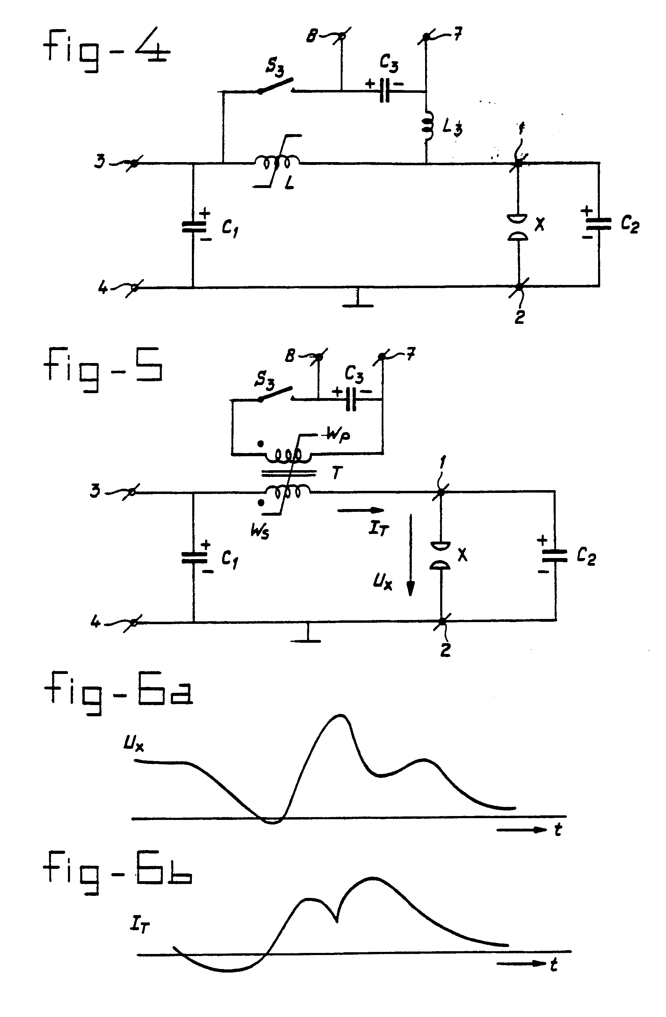

Figure 4 shows a further embodiment of the excitation circuit according to Figure 2, using a third energy storage circuit $C_3$, with switching means $S_3$ and inductance $L_3$. In contrast with Figure 3 the third energy storage circuit is now connected in parallel with the magnetically saturable inductive element L, or an inductive switching circuit that replaces this element, such as $S_1$, $L_1$ according to Figure 1. The operation of this embodiment of the circuit according to the invention is as follows.

Suppose that the respective energy storage circuits are electrically charged with a polarity as indicated by ±- signs. At the moment that the switching means $S_3$ are brought into a conducting state, from the third energy storage circuit $C_3$ a current will flow which charge reverses the second energy storage circuit $C_2$. A part of the current supplied by the third energy storage circuit $C_3$ is necessary to saturate the element L. The moment L is saturated, resonant charge exchange between the first $C_1$ and second $C_2$ energy storage circuits will be possible. Because the inductive element L is saturated, the electric charge can be supplied from the first energy storage circuit $C_1$ to the laser for sustaining it in ignited condition for some time. An advantage of the circuit according to Figure 4 is that the second energy storage circuit $C_2$ can be connected to the load terminals 1, 2 of the circuit as much as possible in a low-inductance manner, no circuits being connected in parallel or in series with the second energy storage circuit $C_2$. Thus the laser can be ignited in a defined manner, as desired.

Figure 5 shows an embodiment of a circuit for carrying out the method according to the invention, in which the third energy storage circuit $C_3$ with switching means $S_3$ is included in the connection between the first energy storage circuit $C_1$ and the load terminals 1, 2 via a saturable transformer T. The saturable transformer T also replaces the switching means $S_1$, $L_1$ such as shown for instance in Figure 1. The corresponding ends of the primary $W_p$ and secondary $W_s$ winding of the transformer T are indicated by dots. Starting from the state of charge of the energy storage circuits in question as indicated by ±- signs, the operation can be .described as follows.

By bringing the switching means $S_3$ into a conducting state, a current will flow through the transformer T from the end of the primary winding $W_p$ indicated by the dot. This results in a current in the secudary winding $W_s$, passing from this winding at the end indicated by the dot. This results in a charge reversing current for the second energy storage circuit $C_2$. At the moment when the transformer T is saturated, the current through the secondary winding $W_s$ will reverse its direction due to the resonant charge exchange between the first $C_1$ and second $C_2$ energy storage circuits. This current causes the transformer to be saturated further.

In the circuits according to Figs. 4 and 5 the third energy storage circuit $C_3$ can also be used to ensure that no voltage occurs across the load terminals 1, 2 during the charging of the first energy storage circuit $C_1$. Starting from a charged third

energy storage circuit $C_3$, with a polarity as shown in for instance Fig. 4, by closing (rendering conductive) the switching means $S_3$, during the charging of the first energy storage circuit $C_1$ from the corresponding terminals 3, 4 at a suitable impedance of the inductive element L, the resultant voltage across the second energy storage circuit $C_2$ will remain approximately equal to zero. This method can be advantageously used for exciting $CO_2$ lasers without risk of undefined discharges.

Figure 6a illustrates the course in time t of the amplitude of the voltage $U_x$ across the first and second load terminals, with a polarity in accordance with the arrow indication in Fig. 5, and Figure 6b illustrates the course of the current $I_T$ through the secondary winding $W_s$ of the transformer T in accordance with the direction indicated with an arrow in Figure 5. Because Figures 6a, 6b are intended as illustrations, no specific numerical values are indicated.

By charge reversing the second energy storage circuit $C_2$ the voltage $U_x$ across the laser decreases. On account of the transformer T being saturated, from a particular negative value a resonant upsweep $U_x$ then takes place as a result of which the laser X ignites. The voltage across the laser, when it is in the ignited condition, decreases to the value of the discharge voltage. With the discharge of the first energy storage circuit $C_1$ the voltage across the laser decreases. The current $I_T$ through the secondary winding $W_s$ reverses its direction when the transformer T is saturated, and exhibits a dip at the time of the ignition of the laser X. In the ignited condition of the laser X the current increases and then decreases again, depending on the quantity of charge of the first energy storage circuit $C_1$.

There is virtually no time delay between the saturation of the transformer T and the resonant charge exchange between the first $C_1$ and second $C_2$ energy storage circuits. After ignition of the laser X no voltage reversal across it takes place. Through the transformer T the third energy storage circuit $C_3$ is galvanically isolated from the first $C_1$ and second $C_2$ energy storage circuits, permitting for instance the third energy storage circuit to be charged from another supply. Because relatively low energies and voltages are used, the switching means $S_3$, for instance, may comprise semiconductor elements.

A practical embodiment of the circuit according to Fig. 4 is realized with the following components:
switch $S_3$ : spark gap
energy storage circuit $C_1$ : pulse forming network with a total capacitance value of 302 nF, divided over 84 parallel ceramic capacitors of 3.6 nF; 30 kV each, make MURATA DHS-Z5V, with a double transit time $(\tau) = 150$ ns and a characteristic impedance $Zo = 0.3\ \Omega$;
energy storage circuit : $C_2$ capacitance value 7 nF, divided across 14 parallel ceramic capacitors of 0.5 nF; 30 kV each, make MURATA DHS-Z5V;
energy storage circuit $C_3$ : capacitance value 7.2 nF, distributed across 2 parallel ceramic capacitors of 3.6 nF; 30 kV each, make MURATA DHS-Z5V;
inductive element L : Racetrack switching choking coil, low induction, core material K4, make SEI;
laser: excimer laser (XeCl), as described in the article "High Pressure Behaviour of an X-ray Preionized Discharge Pumped XeCl-laser", by J.W. Gerritsen and G.J. Ernst, Appl. Phys. B 46, 1988, pp. 141-146.
Prior to the ignition of the laser the voltages across $C_1$, $C_2$ and $C_3$ are 6, 6, and 15 kV, respectively.

It will be clear that,. without departure from the basic inventive idea of the invention, the circuitry shown and described can in many ways be supplemented and extended, with more circuits and/or more saturable elements, transformers, etc., for instance for exciting a plurality of lasers or other types of loads which exhibit a voltage and impedance behaviour that corresponds with that of a laser.

## Claims

1. A method of exciting a gas discharge laser comprising first and second electrodes having connected to them capacitive first and second electric energy storage circuits between which resonant charge transfer is possible; wherein an electric charge is provided to the first energy storage circuit resulting in a voltage with a first polarity relative to the electrodes of the laser; wherein electric charge is resonantly transferred from said first energy storage circuit to said second energy storage circuit for igniting the laser; and wherein sufficient electric energy is supplied from said first energy storage circuit for sustaining the laser in an ignited state for a certain period of time, characterized by the steps of:
- supplying the second energy storage circuit with an electric charge, such that a voltage results with a second polarity relative to the electrodes of the laser, said second polarity being opposite to the first polarity; and
- subsequently effecting a resonant charge exchange between the first and the second energy storage circuits, in such a way that the second energy storage circuit attains a voltage of the first polarity, sufficiently high for igniting the laser.

2. A method according to claim 1, characterized in that the step of supplying the second energy storage circuit with an electric charge comprises:
- supplying the second energy storage circuit with an electric charge, resulting in a voltage with the first polarity , and
- charge reversing the second energy storage circuit for effecting a state of charge resulting in a voltage with the second polarity.

3. A method according to claim 2, characterized in that the second energy storage circuit is resonantly charge reversed in itself.

4. A method according to claim 2, characterized in that the second energy storage circuit is charge reversed using a capacitive third energy storage circuit supplied with an electric charge.

5. A method according to claim 4, characterized in that the second energy storage circuit is resonantly charge reversed.

6. A method according to any of the preceding claims, for exciting a gas discharge laser with an ignition voltage of the order of magnitude of twice the value of its discharge voltage, characterized in that the first and second energy storage circuits are supplied with electric charges, resulting in opposite polarized voltages relative to the electrodes of the laser with values of the order of magnitude of the discharge voltage.

7. A method according to any of the claims 1-5, for exciting a gas discharge laser with an ignition voltage higher than twice the value of its discharge voltage, characterized in that the first and second energy storage circuits are supplied with electric charges, resulting in opposite polarized voltages relative to the electrodes of the laser with values of the order of magnitude of twice the discharge voltage.

8. A method according to claim 5, characterized in that the second and third energy storage circuits are supplied with electric charges, resulting in mutually opposite polarized voltages with values of the order of magnitude of the discharge voltage, in which the second energy storage circuit by resonant charge reversal is brought to a voltage with a value of the order of magnitude of twice the discharge voltage.

9. A method according to any of the preceding claims, characterized in that the resonant charge transfer is effected using magnetic switches.

10. A method according to any of the preceding claims, characterized in that the first energy storage circuit is a part of a pulse forming network.

11. An electric excitation circuit, suitable for carrying out the method according to one or more of the preceding claims, comprising:
first and second load terminals for connecting an electric load;
at least one capacitive first energy storage circuit with means for supplying electric charge to said at least one first energy storage circuit, resulting in a voltage with a first polarity relative to the load terminals, said first energy storage circuit being connected with the load terminals via a first inductive switching circuit; and
at least one capacitive second energy storage circuit connected with the load terminals;
characterized by further means for supplying electric charge to said at least one second energy storage circuit, resulting in a voltage with a second polarity relative to the load terminals, said second polarity being opposite to the first polarity.

12. An electric excitation circuit according to claim 11, characterized in that the further means comprise an inductive further switching circuit coupled to said at least one second energy storage circuit, for the resonant supply of electric charge to said at least one second energy storage circuit.

13. An electric excitation circuit according to claim 11, characterized in that one switching circuit is equipped for supplying electric charge from said at least one first energy storage circuit to said at least one second energy storage circuit, resulting in a voltage with the first polarity, the further means being equipped for charge reversing said at least one second energy storage circuit.

14. An electric excitation circuit according to claim 13, characterized in that the further means comprise an inductive further switching circuit coupled with said at least one second energy storage circuit, the switching of said further switching circuit permitting the resonant charge reversal of said at least one second energy storage circuit.

15. An electric excitation circuit according to claim 14, characterized in that the inductive further switching circuit comprises at least magnetically saturable coil.

16. An electric excitation circuit according to claim 13, characterized in that the further means comprise at least one capacitive third energy storage circuit, with yet further means for supplying electric charge to said at least one third energy storage circuit, and a yet further switching circuit coupled thereto, the switching of said switching circuit permitting the exchange of charge with said at least one second energy storage circuit for the charge reversal thereof.

17. An electric excitation circuit according to claim 16, characterized in that said at least one third energy storage circuit in series with its yet further inductive switching circuit is coupled in parallel with said at least one second energy storage circuit.

18. An electric excitation circuit according to claim 16, characterized in that said at least one third energy storage circuit in series with its yet further switching circuit is coupled in series with said at least one first and second energy storage circuits.

19. An electric excitation circuit according to claim 18, characterized in that said at least one third energy storage circuit in series with its yet further switching circuit is coupled in parallel with said one inductive switching circuit.

20. An electric excitation circuit according to any of claims 13-19, characterized in that said one inductive switching circuit comprises at least one magnetically saturable coil.

21. An electric excitation circuit according to claim 18, characterized in that said one inductive switching circuit comprises at least one magnetically saturable transformer, to the primary winding of which said at least one third energy storage circuit in series with its yet further switching circuit is connected, and the secondary winding of which is connected in series with said at least one first energy storage circuit.

22. An electric excitation circuit according to any of claims 15-19, characterized in that said yet further switching circuit is an inductive switching circuit for the resonant exchange of charge.

23. An electric excitation circuit according to any of claims 11-22, characterized in that said further and yet further switching circuits each comprise at least one series connection of a semiconductor switching element and an inductive element.

24. An electric excitation circuit according to any of claims 11-23, characterized in that said at least one first, second and third energy storage circuits comprise one or more elements with capacitive action.

25. An electric excitation circuit according to any of claims 11-24, characterized in that said at least one second energy storage circuit is coupled with the load terminals in a low-inductance manner as much as possible.

26. An electric excitation circuit according to any of claims 11-25, characterized in that said at least one first energy storage circuit is part of a pulse forming network.

27. An electric excitation circuit according to any of claims 11-26, characterized in that at least one power supply circuit is provided for optionally supplying electric charge to said at least one first, second, and third energy storage circuits.

28. An electric excitation circuit according to any of claims 11-27, characterized in that at least one gas discharge laser is connected to said first and second load terminals.

29. An electric excitation circuit according to claim 28, characterized in that said at least one laser is a $CO_2$ laser.

30. An electric excitation circuit according to claim 28, characterized in that said at least one laser is an excimer laser.

fig-1

fig-2

fig-3

fig-4

fig-5

fig-6a

fig-6b

13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | APPLIED PHYSICS LETTERS, vol. 43, no. 8, 15th October 1983, pages 735-737, American Institute of Physics; W.H. LONG, Jr. et al.: "Efficient discharge pumping of an XeCl laser using a high-voltage prepulse" * Figure 1 * | 1,30 | H 01 S 3/097 |
| D,A | APPLIED PHYSICS LETTERS, vol. 48, no. 23, 9th June 1983, pages 1574-1576, American Institute of Physics; C.H. FISHER et al.: "High efficiency XeCl laser with spiker and magnetic isolation" * Abstract; figure 1 * | 1,30 | |
| D,A | US-A-4 679 203 (R.S. TAYLOR et al.) * Abstract; figures 1,2,5 * | 1,30 | |
| P,X | WO-A-8 910 657 (SIEMENS) * Page 6, lines 26-33; figure 2 * | 1,7,30 | |
| | | | TECHNICAL FIELDS SEARCHED (Int. Cl.5) |
| | | | H 01 S |

The present search report has been drawn up for all claims

| Place of search | Date of completion of the search | Examiner |
|---|---|---|
| THE HAGUE | 16-08-1990 | MALIC K. |